# EUROPEAN PATENT SPECIFICATION

(11) **EP 0 367 454 B1**
(45) Date of publication and mention of the grant of the patent: **12.04.1995**
(21) Application number: 89310823.3
(22) Date of filing: 20.10.1989
(51) Int. Cl.: G11B 25/06

(54) **Cassette holder device for tape recorder**
Kassettenbehälter für Bandrekorder
Dispositif de support de cassette pour appareil d'enregistrement à bande

(30) Priority: 31.10.1988 JP 274882/88; 31.10.1988 JP 274883/88
(43) Date of publication of application: 09.05.1990
(73) Proprietor: MATSUSHITA ELECTRIC INDUSTRIAL CO., LTD., Kadoma-shi, Osaka-fu, 571 (JP)
(72) Inventor: Sakumoto, Hideki, Katano-shi (JP); Hirano, Machiko, Moriguchi-shi (JP)
(74) Representative: Sorrell, Terence Gordon

(56) References cited:
- EP-A- 0 201 699
- EP-A- 0 274 544
- EP-A- 0 286 751
- EP-A- 0 288 165
- EP-A- 0 334 257
- WO-A-89/04539
- DE-A- 3 626 939
- DE-A- 3 626 941
- US-A- 3 703 295

## Description

The present invention relates to a cassette holder device for a tape recording apparatus, and particularly to a cassette holder device which is adapted to receive two kinds of cassettes such as a large size cassette and a small size cassette.

A conventional cassette holder device having a mechanism for preventing erroneous insertion of a cassette tape will be described below by referring to some of the drawings.

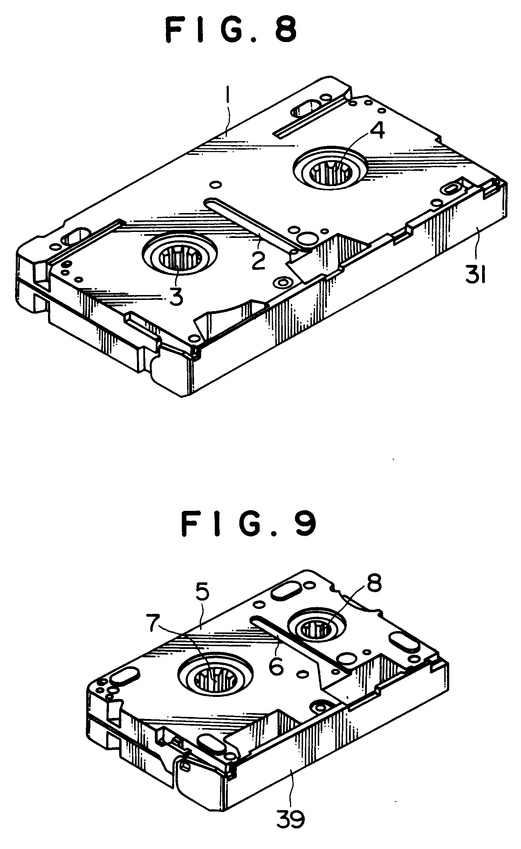

Fig. 8 is a rear side view of a large size cassette tape (hereinafter, referred to simply as a large size cassette). In the figure, a large size cassette 1 is formed with a guide groove 2 in its rear surface and includes a supply reel 3 and a take-up reel 4.

Fig. 9 is a rear side view of a small size cassette tape (hereinafter, referred to simply as a small size cassette). In the figure, a small size cassette 5 is formed with a guide groove 6 in its rear surface and includes a supply reel 7 and a take-up reel 8.

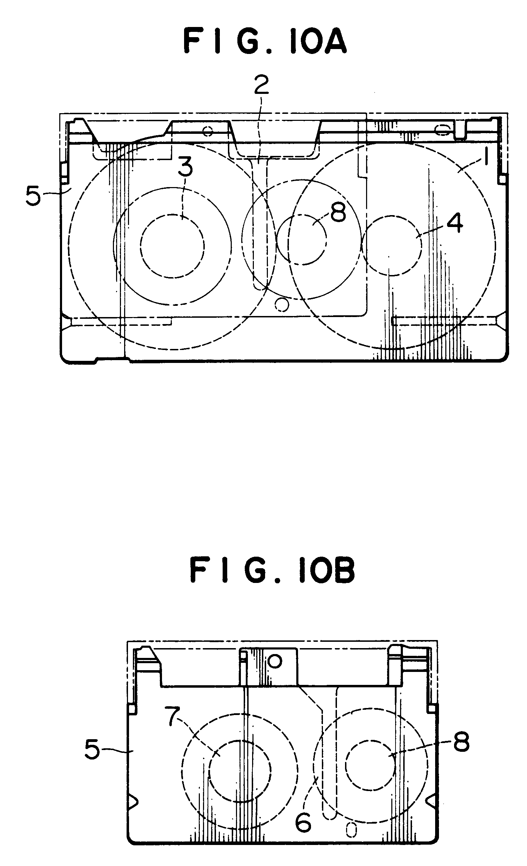

Figs. 10A and 10B show a positional relationship between a large size cassette 1 and a small size cassette 5 in a cassette holder. From these figures, it is seen that, when left side edges of the large size cassette 1 and the small size cassette 5 are aligned with each other, the positions of the guide grooves 2 and 6 are coincident with each other.

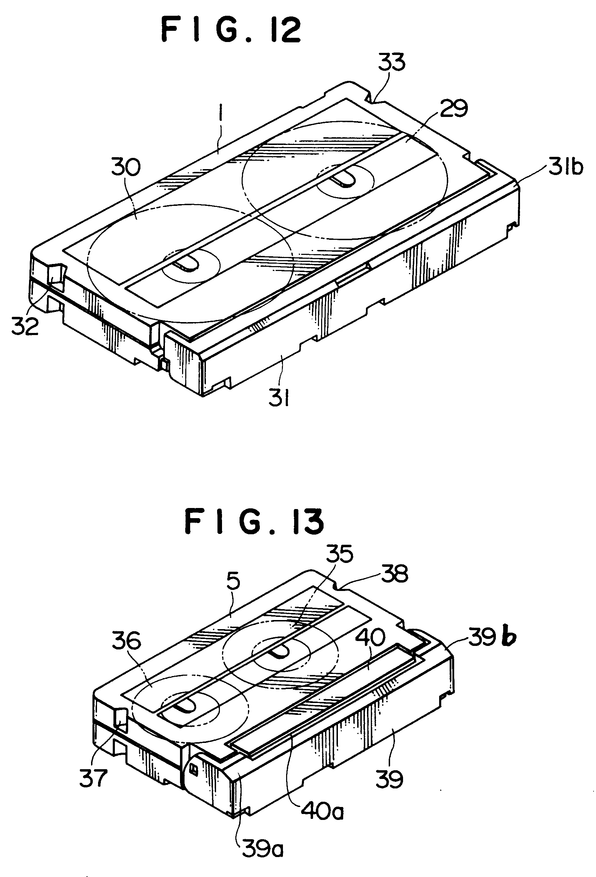

Fig. 12 and Fig. 13 show perspective views of a large size cassette and a small size cassette, respectively. In Fig. 12, the two reels contained in the large size cassette 1, which is generally box shaped, include respective flanges 29 and 30. A lid 31 for normally covering a tape extending portion on the front surface of the cassette is urged in a lid closing direction by means of a spring (not shown), and is formed with a slant surface 31b on an upper front portion thereof. Grip grooves 32 and 33 are formed to the rear of side surfaces of the large size cassette 1. In Fig. 13, the reels contained in small size cassette 5 have respective flanges 35 and 36. Grip grooves 37 and 38 are formed to the rear of side surfaces of the small size cassette 5. Further, a front lid 39, for protecting a tape extending along a front surface of the cassette, and a rear lid 40 for similarly protecting the tape extending portion are provided and are each urged in lid closing directions by means of respective springs (not shown). Front lid 39 is formed with a slant surface 39a on an upper front portion thereof. A step portion 40a is defined between front lid 39 and rear lid 40.

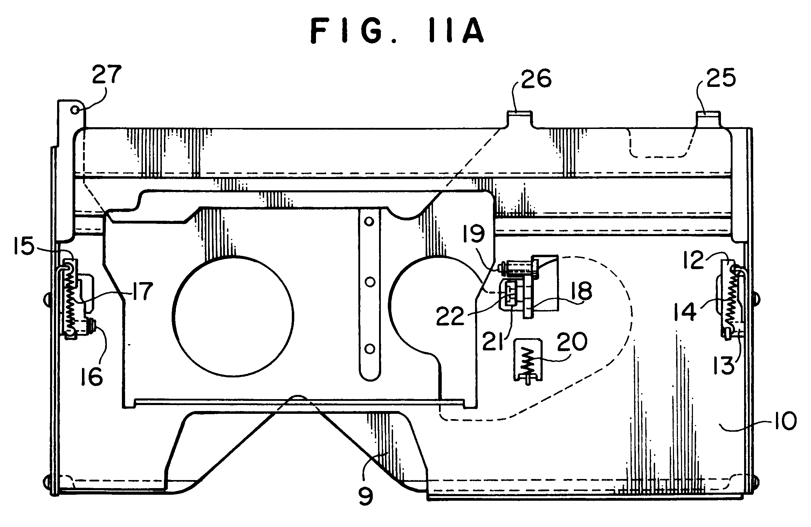

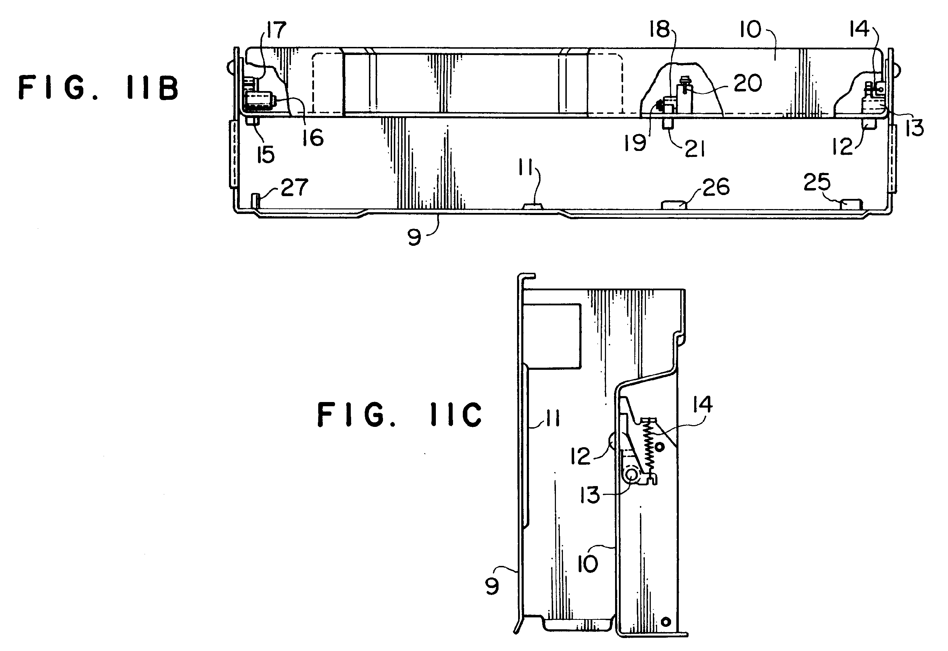

Figs. 11A and 11B show a conventional cassette holder. In the figure, numeral 9 denotes a cassette holder member for accommodating a large size cassette 1 or a small size cassette 5 so as to load and unload each of them from an apparatus such as a video tape recorder (not shown). A guide member 11 for guiding a cassette when a cassette is inserted, and preventing erroneous insertion of the cassette is fixed on cassette holder member 9 by caulking. On an upper portion of the cassette holder member 9 is screwed a top plate 10, thereby forming a box shape as a whole. On the upper side of top plate 10, there are provided three mechanisms for preventing the large size cassette 1 or the small size cassette 5 from floating up when loaded in a body of an apparatus. The first mechanism is a cassette urging lever 12 swingable about a pin 13 and urged downwardly by means of a spring 14. The second mechanism comprises a cassette urging lever 15 located at a position corresponding to an upper left portion of the large size cassette 1 or the small size cassette 5. Cassette urging lever 15 is also swingable about a pin 16 and urged downwardly by means of a spring 17. The third mechanism is a cassette urging lever 18 located at a position corresponding to a central portion of the large size cassette 1 and to an upper right portion of the small size cassette 5. Cassette urging lever 18 is swingable about a pin 19 and urged downwardly by means of a spring 20. A roller 21 is located at a position corresponding to the upper portion of the large size cassette 1 or the small size cassette 5 and is rotatably supported on a lever 18 by means of a pin 22. Among cassette stoppers 25, 26, and 27, stoppers 25 and 26 are formed integrally with cassette holder 9, while stopper 27 is a separate member fixed to cassette holder 9 by caulking a pin. These stoppers 25, 26, and 27 limit the extent of cassette insertion.

The cassette 1 or 5 is, when loaded into the apparatus (not shown), supported by reference pins provided on a chassis and adapted to engage with reels 3 and 4 in the large size cassette or reels 7 and 8 in the small size cassette 5, and is pushed downwards against these reference pins by the cassette retaining levers 12, 15 and the cassette retaining roller 21 with the lower surface of the cassette being spaced apart from the chassis. Thus, cassettes can be positioned and held. Accordingly, the opening of cassette holder member 9 for inserting a cassette 1 or 5 has a height greater than the depth of cassette 1 or 5.

As mentioned above, in a cassette holder device of the prior art, the question of whether cassette insertion is correct or erroneous is judged by whether the engagement between guide groove 2 or 6 formed in the lower surface of a cassette and cassette guide 11 fixed to cassette holder member 9 is normal or not. Namely, in case of erroneous insertion of a cassette, insertion is impossible because of an abutment of a cassette side surface against a tip of the cassette guide 11.

However, in the conventional device, in order to prevent erroneous insertion of a cassette, it is necessary to increase the depth of guide groove 2 or 6 and make the height of the cassette guide 11 higher to allow a wide range of engagement between a cassette surface and the cassette guide. These structural features require an increased depth of cassette, because of the provision of a deeper guide groove in addition to reels for winding a tape. On the other hand, it is desired to make the depth of a cassette a minimum for assuring easier handling and convenient storing thereof.

As mentioned above, in the prior art there is a restriction on minimizing the depth of guide groove 2, 6 and the height of cassette guide 11. Upon erroneous insertion of a cassette using great force, the cassette may be forced with the cassette riding over the cassette guide 11 due to the abovementioned rather wide clearance between the height of the cassette insertion opening of the holder member 9 and the depth of the cassette, or due to deformation of a bottom surface of the cassette holder member 9 (on which cassette guide 11 is disposed). In such erroneous operation, it becomes difficult to remove the forcedly inserted cassette, and further, damage may occur to the cassette holder and even the apparatus body, because the cassette holder member can not be engaged correctly with reel beds or a tape guide post (not shown) both arranged within the apparatus body.

A cassette frame is, in general, made from a plastics material by a moulding process, and is inferior in strength at a central portion thereof due to its structure.

The top plate 10 of the shown prior art device includes three cassette retainers 12, 15, and 18 for urging a large size cassette 1 or a small size cassette 5 against the chassis. With this arrangement, when a large size cassette is inserted, the cassette urging roller 21 abuts against a part near the central portion of the large cassette 1 where the strength of the cassette 1 is inferior. This urging force of roller 21 causes deformation of the cassette 1 and inclination of a guide post arranged in the cassette, adversely affecting tape running within the cassette.

When a cassette is loaded into the apparatus body, lids 31, 39 provided on the cassette are required to be opened against the spring forces usually urging the lids to their closed positions. These spring forces act on the cassette in a direction opposite to the cassette insertion direction, thereby creating a risk that the cassette is not inserted into a regular position. As mentioned before, a cassette is required to be inserted to a position defined by stoppers 25, 26, 27. A positional deviation of the cassette may adversely affect tape running, because the cassette is not located in a correct position in the apparatus when the cassette holder is itself loaded in the apparatus. To prevent any positional deviation of a cassette, the urging forces for retaining levers 12, 15 and roller 21 are made rather large. However, this solution has the disadvantage that the force required for inserting a cassette becomes greater and is accompanied by an uncomfortable insertion feeling. Further, when a small size cassette is not fully inserted in the holder with its rear edge not abutting against stoppers 26 and 27, damage to the apparatus body and the cassette may be caused. In addition, due to the frictional sliding contact between the upper surface of the cassette and the retaining levers 12 and 15, the surface of the cassette may suffer scratches, and the swarf produced thereby may fall into the inside of the apparatus body, possibly causing interruptions in reproduced signals.

Further, since the cassette is formed with a guiding groove 6 on its lower surface, the strength of the cassette is decreased and distortion in a moulding process is apt to be caused, leading to a deterioration in appearance and accuracy of size of the cassette. In addition, as mentioned before, the depth of the cassette becomes greater due to the guide groove, resulting in an undesirable cassette size.

Some of the problems as encountered with the above described conventional device are also encountered with the device described in European Patent Specification EP-A-0201099. This describes a cassette holder device for loading/unloading a cassette into/from a tape recording apparatus body, the device having a cassette holder member with a cassette insertion opening and a cassette guide member rotatably mounted on a lower portion of the holder member adjacent the insertion opening.

Other approaches to the problem of insertion of two sizes of cassette are described in DE-A-3626939 and DE-A-3626941.

The present invention is devised in view of the abovementioned problems inherent in the prior art.

Attention is drawn to the document EP-A-0 334 257, published on 27.09.89 (i.e. after priority date of this application) which shows a similar cassette insertion mechanism to that of the invention, except that the small cassette guide rotation mechanism is different.

Accordingly, a first object of the present invention is to provide a cassette holder device for tape recorders in which a cassette is inserted precisely at a normal position, and which prevents a cassette from being erroneously inserted in an inverted posture.

Further, a second object of the invention is to provide a cassette holder device which can prevent a large size cassette from being subjected to a large load exerted by a small size cassette retaining roller upon insertion of the large size cassette.

Further, a third object of the invention is to provide a cassette holder device in which a cassette will not shift accidentally from its regular position during the cassette being loaded into the body of a tape recording apparatus by the cassette holder device.

To this end, according to a first aspect of the present invention, there is provided a cassette holder device capable of receiving a cassette for loading/unloading said cassette into/from a tape recording apparatus body, said device comprising a cassette holder member for holding a cassette, said holder member having a cassette insertion opening, an upper portion and a rotatably mounted cassette guide member, characterised in that the device is capable of receiving at least two kinds of cassette of differing sizes, and said cassette guide member is rotatably mounted on the upper portion of the cassette holder member so as to project into said cassette insertion opening for guiding a small size cassette into the cassette holder member in order to regulate an inserted position of said cassette to have a slight gap between a surface of the small cassette guide member and a side surface of the cassette opposing said guide member surface, whereby upon insertion of a small size cassette, said small size cassette guide member guides said small size cassette to its inserted position by means of said guide member surface guiding the side surface of the cassette, and upon insertion of a large size cassette, said small size cassette guide member is rotated upwardly to a position outside an insertion path of the large size cassette under the action of an insertion force applied to the large size cassette.

The above and further objects, features and advantages of the present invention will be more apparent from the following description of embodiments of the present invention with reference to the drawings, in which:

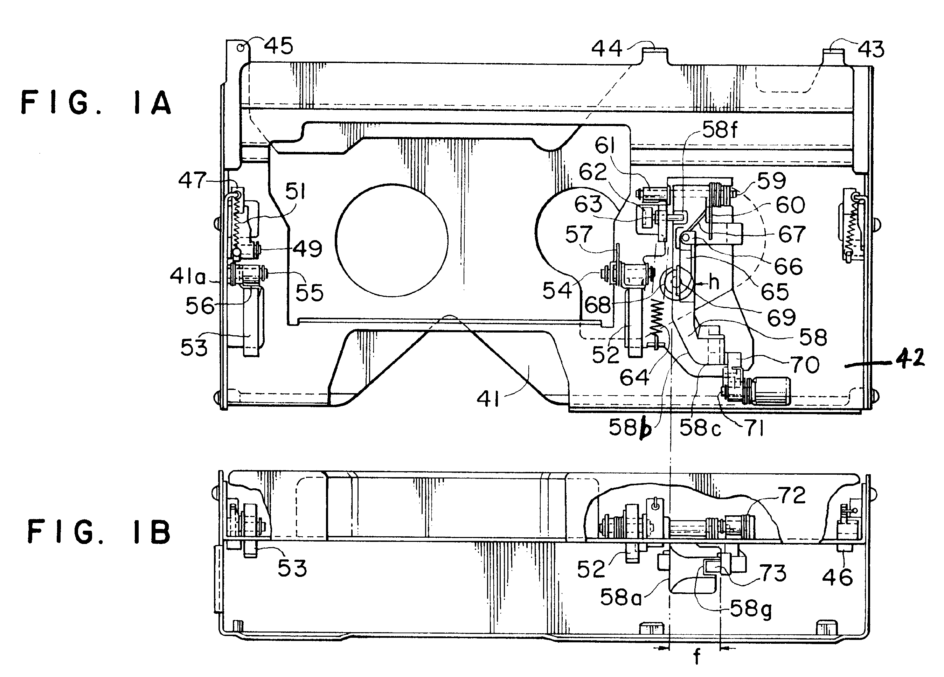

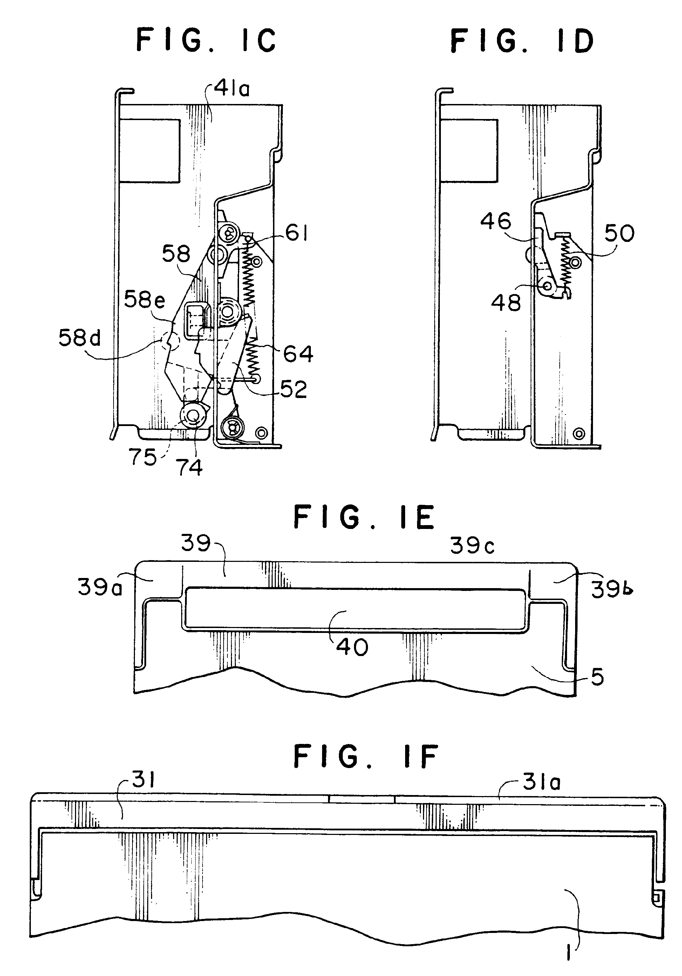

Figs. 1A to 1F are views illustrating one embodiment of a cassette holder device according to the present invention, Fig. 1A being a front view of the cassette holder device, Fig. 1B being a side view thereof observed in a cassette insertion direction, Fig. 1C being a side view showing a cassette guide member therein, Fig. 1D being a side view showing a cassette retaining member therein, Fig. 1E being a front view partially showing a small size tape cassette adapted to be inserted into the cassette holder device, and Fig. 1F is a front view partially showing a large size tape cassette adapted to be inserted into the cassette holder device;
Fig. 2 is a perspective view partially illustrating the small size tape cassette guide member;
Figs. 3A to 3C are views for explaining the operation of the small size tape cassette guide member;
Figs. 4A to 4C are views for explaining the operation of an erroneous insertion preventing lever in the cassette holder device;
Figs. 5A and 5B are views illustrating other examples of large and small size tape cassettes;
Fig. 6 is a side view illustrating a small size tape cassette having its lid in an open position;
Fig. 7 is a front view illustrating the engagement between a grip groove in the small size tape cassette and a small size tape cassette locking roller;
Fig. 8 is a perspective view of a large size tape cassette observed from the rear side surface thereof;
Fig. 9 is a perspective view of a small size tape cassette observed from a rear surface thereof;
Figs. 10A and 10B are front views, illustrating the cassette holder device and its positional relationship to a large and a small size tape cassette respectively;
Figs. 11A through 11C are plan, front and side views, respectively, illustrating a conventional cassette holder device;
Fig. 12 is a perspective view of a large size tape cassette observed from a front surface thereof; and
Fig. 13 is a perspective view of a small size tape cassette observed from a front surface thereof.

The cassette holder device according to the present invention will be described below by referring to the accompanying drawings.

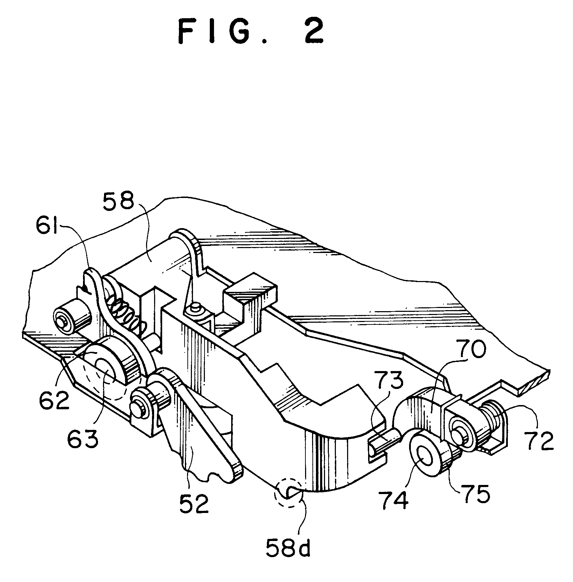

Figs. 1 and 2 show a cassette holder device according to an embodiment of the present invention which is adapted to receive two kinds of cassettes. In the figures, a cassette holder member 41 and a top plate 42 are assembled together by means of screws to form a box shape housing for receiving cassettes. Stoppers 43, 44, 45 are provided on cassette holder 41 for limiting the maximum depth of cassette insertion. Cassette retaining levers 46, 47 are rotatably mounted on top plate 42 by means of pins 48, 49, and urged towards an inserted cassette by means of springs 50, 51, respectively. Erroneous insertion preventing levers 52, 53 for preventing the erroneous insertion of a cassette are rotatably mounted on top plate 42 through pins 54, 55 and urged towards a cassette by means of springs 56, 57 respectively. The erroneous insertion preventing levers are so located as to engage with slant surfaces (39a 39b) of front lid 39 of a small size cassette 5, when the small size cassette is inserted into its normal position as shown in the figure.

A small cassette guide member 58 for guiding a small size cassette 5 to its normal position is mounted on top plate 42 by means of a pin 59 with its side surface 58a spaced apart from a side surface 41a of the cassette holder 41 by a distance somewhat greater than the breadth of a small size cassette, and urged towards the cassette (downwardly) by means of a spring 60. To guide a small size cassette to its normal inserted position, even in the case where the cassette is inserted with some positional deviation to the right as shown in the figure, small size cassette guide member 58 is provided with a slanted surface portion 58b and a parallel surface portion 58c parallel to the front surface of the cassette. Further, the small size cassette guide member 58 is formed with an arcuate surface portion 58e which slides on the upper surface of a cassette and a pawl 58d for stopping cassette insertion in the case of erroneous insertion.

A small size cassette retaining roller arm 61 is mounted on the support pin 59, and has a roller 62 for making contact with an upper surface of a cassette mounted thereon by means of a pin 63. The pin 63 engages at one end thereof with a recess 58f formed in the small size cassette guide member 58, and is adapted to be raised upwardly in association with a rotational motion of the small size cassette guide member 58. Further, in order to apply a suitable urging force from roller 62 to the cassette, the small size cassette retaining roller arm 61 is biased by means of a spring 64.

A small size cassette locking roller arm 65 is rotatably mounted on the small size cassette guide member 58 by means of a pin 66, and is biased in the direction indicated in the figure by arrow h by means of a spring 67. On one end of the locking roller arm 65 is rotatably mounted a small size cassette locking roller 68 by means of a pin 69. This locking device is located such that the locking roller 68 projects beyond the cassette guide surface 58a of the small size cassette guide member 58.

A guide opener 70 is rotatably mounted on the top plate 42 by means of a pin 71 and is biased downwardly by means of a spring 72. A projection 73 depending from the guide opener 70 engages with a groove 58g formed at the tip of the small size cassette guide member 58. As a result, the small size cassette guide member 58 rotates upwardly in association with the motion of the guide opener 70. On the guide opener 70 there is rotatably mounted an opener roller 75 by means of a pin 74 at a position near to the cassette insertion opening where the opener roller will firstly contact with a front portion 31a of a cassette.

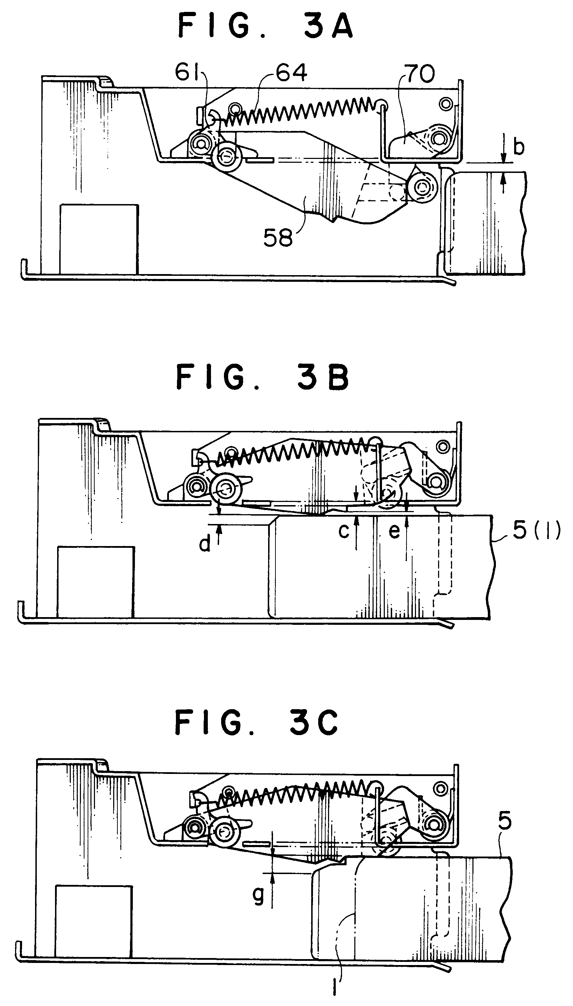

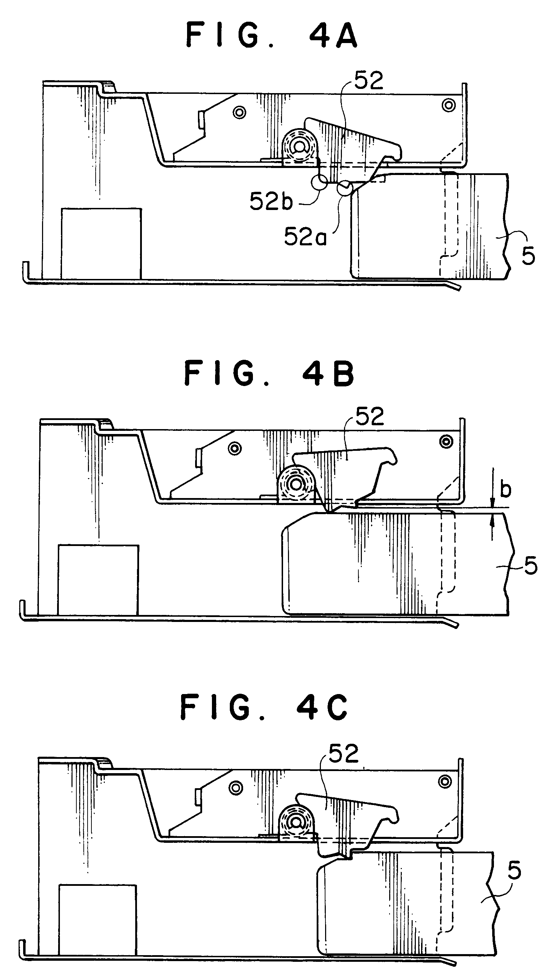

Functions of the device will be described below with reference to Fig. 3A through to Fig. 4C. Figs. 3A through to 3C show an insertion operation for a cassette and the motion of the small size cassette guide member 58, the guide opener 70 and the small size cassette retaining roller arm 61, while Figs. 4A through 4C show the motion of the erroneous insertion preventing levers 52, 53. As shown in the figures, the depth of the cassette receiving housing consisting of the cassette holder 41 and the top plate 42 is greater than the depth of a cassette by an amount b as shown in Fig. 3A. This clearance is provided to permit the cassette to float up from the cassette holder 41 and to move to a predetermined position and to a height relative to the apparatus body, when the cassette holder 41 containing a cassette is loaded into the apparatus body.

First, the case of normal insertion of a small size cassette will be described. As shown in Fig. 1A, small size cassette 5 is inserted with its left side surface being aligned with the left inner side surface of the cassette holder 41. In this case, since the small size cassette 5 does not make contact with the opener roller 75 of the guide opener 70, the small size cassette guide member 58 remains at a position as shown in Fig. 3A, and also in Fig. 1A and Fig. 2, and side surface 58a of guide member 58 guides a side surface of the small size cassette 5. Meanwhile, the erroneous insertion preventing member 52 is rotated upwards, as shown in Fig. 4A, by the slanted surface 39a of the front lid 39 of the small size cassette 5, and a pawl 52a of the erroneous insertion preventing member 52 is prevented from engaging with a step 40a of the small size cassette 5. Thus, the small size cassette 5 slides on pawl 52a and is inserted until it abuts against stoppers 44, 45 of the cassette holder 41. In the abovementioned insertion operation, the small size cassette locking roller 68 of the small size cassette guide member 58 rolls on the right side wall of the cassette to the abovementioned inserted position where locking roller 68 engages with a grip groove 37 of the cassette to locate the cassette at its normal inserted position. Further, in order to prevent pawl 52a of the erroneous insertion preventing lever 52 from making contact with the upper surface of the cassette 5 and scratching the same, or from falling into any recess on the cassette and hindering the insertion of the cassette, an arcuate projection 52b is provided rearward of the pawl 52a and slides on the upper surface of the cassette, thereby producing a gap b between the pawl 52a and the upper surface of the cassette.

Although not referred to in the above description, the other erroneous insertion preventing lever 52 has the same structures and function as those of lever 52.

Next, the case of the insertion of a large size cassette will be described below. As shown in Fig. 3A, a large size cassette 1 is inserted through the front portion of cassette holder 41. Firstly, the front portion 31a of the large size cassette 1 makes contact with the opener roller 75 rotatably supported by guide opener 70 and rotates said guide opener 70 in a clockwise direction as viewed in Fig. 3A. In this operation, the projection 73 formed on the guide opener 70 moves upwardly sliding within the groove 58g of the small size cassette guide member 58, thereby rotating the small size cassette guide member 58 in a counterclockwise direction as shown in Fig. 3C to locate the flat tip portion 58c of small size cassette guide member 58 sufficiently away from the front portion of the cassette. When insertion of the large size cassette 1 is continued from a position as indicated in Fig. 3C with a double dot chain line, a chamfer-like slanted portion 31b formed on the lid 31 of the large size cassette 1 pushes pawl 58d of the small size cassette guide member 58, preventing the cassette from engaging the pawl, and rotates the small size cassette guide member 58 in a counterclockwise direction into a position above the cassette as shown in Fig. 3B. Then, the cassette is inserted farther until it abuts against stoppers 43, 44, 45.

The height c of pawl 58d on the small size cassette guide member 58 is smaller than the depth d of the chamfer-like slanted surface of the lid 31 of the large size cassette 1. Rearward of pawl 58d is an arcuate surface portion 58e, as shown in Fig. 1C, for producing a sliding contact between the upper surface of the cassette and the small size cassette guide member 58. In the situation shown in Fig. 3B, arcuate surface portion 58e makes contact with the upper surface of the cassette and a gap e exists between pawl 58d and the upper surface of cassette, thereby preventing the pawl from interfering with the upper surface of the cassette.

The function of the small size cassette retaining roller arm 61 in relation to the abovementioned handling of the cassette will be described below. When the small size cassette guide member 58 rotates in a counterclockwise direction as viewed in the figure, a roller arm 61 with a roller 62 mounted thereon receives a rotating force from the guide member 58 through pin 63 engaging with a recess 58f of the small size cassette guide member 58, and thus rotates against the force of spring 64 to a position where roller 62 is spaced above the upper surface of the cassette, as shown in Fig. 3B.

A cassette urging force is required, in general, to be as great as several hundred grams, and acts, in a conventional device, on a central portion of a large size cassette. In the present invention, the cassette urging force is applied to the central portion of a large size cassette guide member 58, and is rather small, because the spring force as transmitted to the cassette is reduced in a ratio depending on the moment of the member 58 about pin 59. Namely, the force acting on the central portion of a large size cassette during insertion is in a range from one third to one fifth of that found in the prior art device, even through the forces of the other springs 67 and 72 are added thereto, i.e. actually smaller than 100 grams. As a result, the risk of cassette deformation due to the urging force is avoided.

In the above, normal insertion of a small size cassette and a large size cassette has been described. Next, a cassette normally inserted into the cassette holder is loaded into an apparatus body through the action of lowering the cassette holder into the apparatus body. This loading operation can be easily carried out by using conventional means such as a linkage mechanism, although the structural detail of such means is not described here.

When the abovementioned cassette loading has been completed, the cassette is correctly supported by the position location members provided in the apparatus body floated above the cassette holder. A small size cassette 5 is urged toward the abovementioned position locating members by means of the cassette retaining lever 47 and the small size cassette retaining roller arm 61, while a large size cassette 1 is urged toward the position locating members by means of the cassette retaining levers 46 and 47.

Next, a case where a small size cassette is inserted with an initial positional deviation from the normal insertion position will be described below. In the case where a small size cassette 5 is slightly deviated rightwardly, namely, rightwardly by a distance smaller than a distance f indicated in Fig. 1B, where the cassette does not make contact with opener roller 75 of guide opener 70, cassette 5 is guided to the normal inserted position by the slanted surface 58b of the small size cassette guide member 58. Flat portion 58c formed on the tip of the small size cassette guide member 58 is provided to prevent the small size cassette guide member 58 from moving upwardly due to the slanted surface 39b of the cassette 5, and has a depth greater than the depth g of the slanted surface 39b of the small size cassette 5. As a result, in the case of a small size cassette being inserted with some lateral deviation, the small size cassette front surface 39c abuts against the flat surface portion 58c of the small size cassette guide member 58, thereby preventing any upward motion of the small size cassette guide member 58, and the cassette is guided to a normal inserted position by virtue of the slanted surface portion 58b, as mentioned above.

Next, in the case where a small size cassette 5 is further deviated on insertion beyond a distance f shown in Fig. 1B, and engages with opener roller 75 of the guide opener 70 will be described below. In this case, the small cassette guide member 58 is rotated upwardly similarly to the abovementioned case of a large size cassette insertion. However, when the small size cassette is inserted further, a step portion of the small size cassette, defined between front lid 39 and rear lid 40, that is the step surface 40a of the rear lid 40 abuts pawl 58d formed on the lower surface of the small size cassette guide member 58, thereby preventing further insertion of the cassette beyond the position shown in Fig. 3C. Further, in this case, the abovementioned erroneous insertion preventing lever 52 makes contact with the small size cassette 5 at a point away from the slanted surface 39b of the front lid 39, and accordingly, the abovementioned step 40a also engages with pawl 52a of the erroneous insertion preventing lever 52, thereby preventing he erroneous insertion of the small size cassette in cooperation with the abovementioned pawl 58d of the guide member 58. Thus, erroneous insertion of the small size cassette 5 is prevented.

Erroneous insertion preventing levers 52, 53 are also provided for preventing a cassette from being erroneously inserted in an inverted posture. The large size cassette 1 and the small size cassette 5 are formed, as shown in Figs. 12 and 13, with a chamfer-like slanted surface 31b and chamfer-like slant surfaces 39a, 39b, respectively, on their respective front portions when viewed in an insertion direction. By virtue of this arrangement, when a cassette is inserted in an inverted posture with respect to the front and rear or the top and bottom, the pawl 52a of the erroneous insertion preventing lever engages with an edge of the respective cassette, thereby preventing erroneous insertion of a cassette.

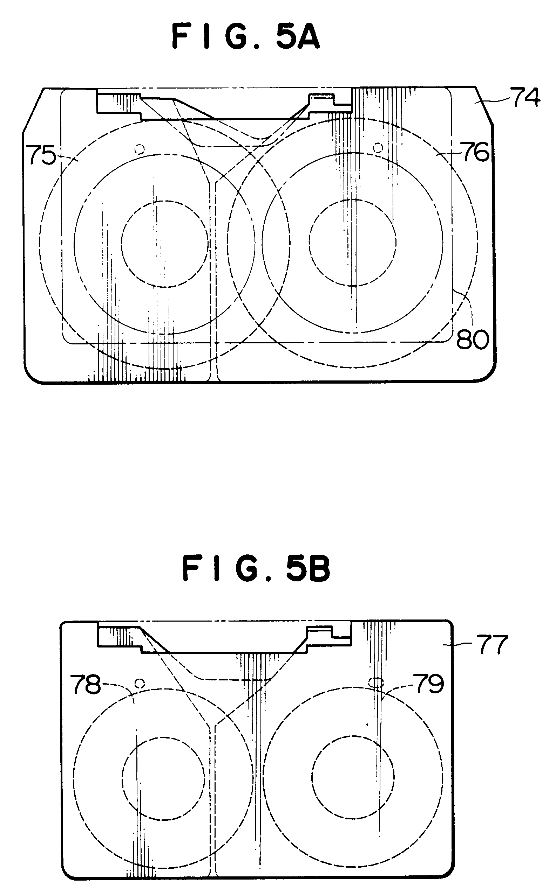

Although, in this embodiment only one small size cassette guide member 58 is provided and a small size cassette is located in the cassette holder with its left side surface and its front surface aligned with those of a large size cassette, respectively, as shown in Figs. 10A and 10B, it is also possible to locate the small size cassette such that its middle line across its breadth and front surface is aligned with that of a large size cassette, respectively, as shown in Figs. 5A and 5B. In this case, on each side of the small size cassette there is arranged a small size cassette guide member 58 and a guide opener 70, although the detail of this arrangement is not described here.

Further, it will be easily understood that the concept of the present invention can be applied to a cassette holder device which is adapted to accommodate three kinds of cassettes having different sizes.

In Figs. 5A and 5B, large size cassette 74 contains tape reels 75 and 76, while small size cassette 77 contains reels 78 and 79. In the figure, imaginary line 80 denotes the position of small cassette relative to a large size cassette.

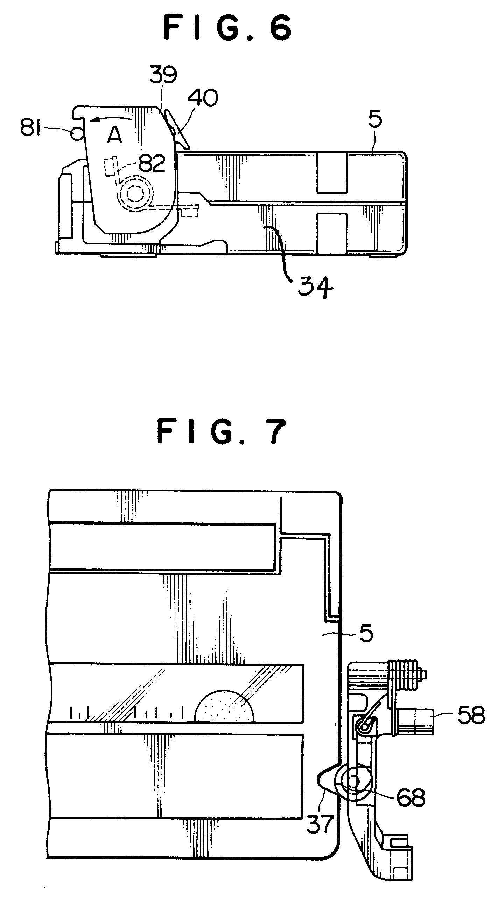

Fig. 6 shows a small size cassette 5 when loaded into an apparatus body such as a VTR. Front lid 39 and rear lid 40 both provided on the front surface of the small size cassette 5 are rotated, in association with a cassette loading action, to the shown open positions by means of a lid opening pin 81 fixed to a cassette holder supporting member (not shown). On the other hand, if the cassette is not loaded into an apparatus body, the lids are maintained in closed positions at all times by means of a spring 82 provided between the front lid 39 and a cassette case 34. Consequently, in the situation shown in Fig. 6, cassette 5 receives a reaction force from pin 81 through lid 39 in the direction shown in the figure by arrow A. This reaction force is generated when opening of the lid begins and continues to exist for as long as the lid is urged by pin 81, thereby being apt to cause a positional shift of the cassette within cassette holder 41. In order to prevent this shift, there is provided a small size cassette locking roller 68 mounted on small size cassette guide member 58, which is shown in Fig. 7.

Fig. 7 shows a relationship between the small size cassette locking roller 68 and a grip groove 37 of the small size cassette when the small size cassette is inserted into the cassette holder. As shown in the figure, small size cassette locking roller 68 engages with grip groove 37, thereby preventing a positional shift of the small size cassette.

As mentioned above, according to the present invention, by virtue of the erroneous insertion preventing lever biased by a rotating force and located in the upper portion of the cassette holder, erroneous insertion of the cassette in an inverted posture can be prevented. In addition, the cassette holder is protected from deformation or damage even when the cassette is forcibly inserted.

Further, on correct insertion of a cassette, the pawl of the erroneous insertion preventing lever is located above the upper surface of the cassette, preventing the cassette from being scratched thus preventing the production of swarf and possible interruption of reproduced signals.

In addition, since the cassette is not subjected to force as in the case of erroneous insertion with an inverted posture of the cassette in a conventional device, the cassette is protected from deformation. Consequently, components in the cassette for controlling a tape running, such as guide posts, can retain their precise positions and attitudes, resulting in an improved performance of an apparatus such as a VTR.

Further, since the pawl of the erroneous insertion preventing lever does not make contact with the upper surface of the cassette, the cassette is not only inserted smoothly, but the upper surface thereof is stopped from being scratched.

Further, in the case of a cassette having a slanted surface provided only in a part of the upper front portion thereof, it is possible to prevent erroneous insertion where the cassette is deviated laterally. Consequently, there is provided a cassette holder device which can easily receive more than two kinds of cassettes having different sizes.

## Claims

1. A cassette holder device capable of receiving a cassette for loading/unloading said cassette into/from a tape recording apparatus body comprises a cassette holder member (41) for holding a cassette, said holder member (41) having a cassette insertion opening, an upper portion (42) and a rotatably mounted cassette guide member(58), characterised in that the device is capable of receiving at least two kinds of cassette of differing sizes, and said cassette guide (58) member is rotatably mounted on the upper portion (42) of the cassette holder member (41) so as to project into said cassette insertion opening for guiding a small size cassette (5) into the cassette holder member (41) in order to regulate an inserted position of said cassette (5) to have a slight gap between a surface (58a) of the small cassette guide member (58) and a side surface of the cassette opposing said guide member surface (58a), whereby upon insertion of a small size cassette, said small size cassette guide member (58) guides said small size cassette (5) to its inserted position by means of said guide member surface (58a) guiding the side surface of the cassette, and upon insertion of a large size cassette (1), said small size cassette guide member (58) is rotated upwardly to a position outside an insertion path of the large size cassette (1) under the action of an insertion force applied to the large size cassette.

2. A cassette holder device as claimed in claim 1, characterised in that it is capable of receiving a small size cassette (5) formed with a step (40a) on an upper front surface portion (39) thereof when viewed in the direction of insertion so that the height of said upper front surface portion is effectively reduced, and a large size cassette (1) having a chamfer-like slanted surface (31a) formed on the upper front surface (31) portion thereof; and the small size cassette guide member (58) has a pawl (58d) formed on a lower surface thereof which engages with the step (40a) of said small size cassette (5), whereby upon insertion of the small size cassette, if the small size cassette is inserted outside a range regulated by said small size cassette guide member (58), the pawl (58d) on said small size cassette engages with the step (40a) of the small cassette so as to inhibit further insertion of the small size cassette, and upon insertion of the large size cassette (1), said small size guide member (58) is rotated by an insertion force applied to the large size cassette, causing said pawl (58d) to retract upwardly so that the lower surface of said small size cassette guide member slides on an upper surface of the large size cassette while being urged thereby during insertion of the large size cassette.

3. A cassette holder device as claimed in claim 2, characterised in that an arcuate projection (58e) is formed on said small size cassette guide member (58) at a position forward of said pawl (58d) when viewed in the direction of cassette insertion, said arcuate projection (58e) makes a sliding contact with an upper surface of a large size cassette during insertion of the large size cassette so as to maintain a gap between said pawl (58d) and the upper surface of the large size cassette.

4. A cassette holder device as claimed in any preceding claim, characterised in that there is a guide opener (70) rotatably provided on the upper portion (42) of the cassette holder member (41) in a position nearer to the front of the tape cassette insertion opening than said small size cassette guide member (58), said opener (70) having one end (73) slidably engaged with said small size cassette guide member (58) and another end (75) which makes contact with a front surface of a cassette upon initial insertion of the cassette whereby, upon insertion of a large size cassette (1), said guide opener (70) is rotated by the front surface (39) of the cassette so that said small size cassette guide member (58) is retracted upwardly.

5. A cassette holder device as claimed in any preceding claim, characterised in that at least a portion of a front surface of said small size cassette guide member (58) is formed with a surface (58c) substantially parallel with a front surface of a cassette being inserted, such that said parallel surface (58c) overlaps the front flat surface of the cassette, and said small size cassette guide member (58) is rotated upwardly in association with the rotation of said guide opener (70) during insertion of a large size cassette (1), and accordingly, the displacement of the front parallel surface (58c) of said small size cassette guide member (58) is such that the overlap between the flat front surface (39) of the large size cassette (1) and the front surface of said small size cassette guide member (58) becomes zero.

6. A cassette holder device as claimed in claim 5, characterised in that the flat parallel surface portion (58c) of the small size cassette guide member (58) and a surface (58b) of said small size cassette guide member opposing a side surface of a small size cassette being inserted are connected with each other through a flat surface inclined relative to said side surface of the small size cassette.

7. A cassette holder device as claimed in any preceding claim, characterised in that there is provided a large size cassette retaining member (46,47) adapted to abut against an upper surface of a large size cassette (1) upon insertion thereof, for urging the large cassette downwardly with a suitable pressure, a small size cassette retaining member (61) adapted to abut against an upper surface of small size cassette (5) upon insertion thereof, for urging said small size cassette downwardly, whereby, upon insertion of the large size cassette (1), the small size cassette guide member (58) is rotated so as to retract out of the insertion path of the large cassette (1), and said small size cassette retaining member (61) is operated in association with the rotation of said small size cassette guide member (58) so as to retract to a position where it does not make contact with the upper surface of the large size cassette.

8. A cassette holder device as claimed in any preceding claim, characterised in that there is provided a small size cassette locking member (68) rotatably mounted on a side surface of said small cassette guide member (58) opposing a side surface of a small size cassette (5) being inserted, and having one part (68) adapted to engage a recess (37) formed in the side surface of the small size cassette, a spring member for urging said small size cassette lock member (68) toward the side surface of the small size cassette, whereby upon completion of insertion of the small size cassette, the part (68) of said small size cassette locking member (68) is engaged in said recess (37), while upon insertion of a large cassette (1), said small size cassette locking member (68) is operated in association with the operation of said small size cassette guide member (58) so as to retract out of the insertion path of the large size cassette (1).

9. A cassette holder device as claimed in any of claims 2 to 8, characterised in that there is provided at least one erroneous insertion preventing lever (52,53) rotatably mounted on the upper portion (42) of the cassette holder member (41) and urged towards a cassette being inserted to prevent erroneous insertion of the cassette, said erroneous insertion preventing lever (52,53) being formed with a pawl (52a) on a lower projecting surface thereof and adapted to be rotated to a position where said pawl (52a) locates lower than an upper surface of a cassette being inserted, said pawl (52a) having a surface parallel with a front surface of the cassette being inserted.

10. A cassette holder device as claimed in claim 9, characterised in that said erroneous insertion preventing lever (52,53) is formed with a step defined by a surface substantially parallel to the front surface of a cassette being inserted and a surface intersecting said parallel surface; the height of said step being made smaller than the height of a slanted surface formed on an upper front portion of the cassette measured in a depth direction of the cassette; and the surface of the step parallel to the front surface of the cassette is adapted to be oppositely directed to the front surface of the cassette.

11. A cassette holder device as claimed in claim 10, characterised in that said step locates at a position lower than the upper surface of an inserted cassette.

12. A cassette holder device as claimed in claim 9, characterised in that said erroneous insertion preventing lever (52,53) is formed with an arcuate projection (52b) at a position deeper than the position of said step viewed in the cassette insertion direction so that, upon insertion of a cassette, said arcuate projection (52b) contacts with an upper surface of a cassette and the tip edge of said step is upwardly moved to a position spaced from the upper surface of the cassette.

## Patentansprüche

1. Kassettenhaltevorrichtung, die eine Kassette zum Einladen/Ausladen der Kassette in/aus ein(em) Bandaufnahmegerätgehäuse aufnehmen kann, umfassend ein Kassettenhalteelement (41) zum Halten einer Kassette, wobei das Halteelement (41) eine Kassetteneinführöffnung, einen oberen Abschnitt (42) und ein verschwenkbar angebrachtes Kassettenführungselement (58) aufweist, dadurch gekennzeichnet, daß die Vorrichtung zumindest zwei Arten Kassetten verschiedener Größen aufnehmen kann und das Kassettenführungselement (58) an dem oberen Abschnitt (42) des Kassettenhalteelements (41) verschwenkbar angebracht ist, so daß es in die Kassetteneinführöffnung hineinragt zum Führen einer Kassette (5) kleiner Größe in das Kassettenhalteelement (41), um eine eingeführte Position der Kassette (5) mit einem kleinen Zwischenraum zwischen einer Oberfläche (58a) des Führungselementes (58) für kleine Kassetten und einer dieser Führungselementoberfläche (58a) gegenüberliegenden Seitenoberfläche der Kassette einzustellen, wodurch das Führungselement (58) für Kassetten kleiner Größe beim Einführen einer Kassette kleiner Größe die Kassette (5) kleiner Größe mit Hilfe der die Seitenoberfläche der Kassette führenden Führungselementoberfläche (58a) in ihre eingeführte Position führt und das Führungselement (58) für Kassetten kleiner Größe beim Einführen einer Kassette (1) großer Größe unter der Einwirkung einer auf die Kassette großer Größe ausgeübten Einführkraft in eine Position außerhalb eines Einführweges der Kassette (1) großer Größe nach oben verschwenkt wird.

2. Kassettenhaltevorrichtung nach Anspruch 1, dadurch gekennzeichnet, daß sie eine Kassette (5) kleiner Größe, die mit einer Stufe (40a) an einem oberen Vorderoberflächenabschnitt (39) davon in Einführrichtung gesehen ausgebildet ist, so daß die Höhe dieses oberen Vorderoberflächenabschnitts effektiv vermindert ist, und eine Kassette (1) großer Größe mit einer an einem oberen Vorderoberflächenabschnitt (31) davon ausgebildeten fasenartigen abgeschrägten Oberfläche (31a) aufnehmen kann; und das Führungselement (58) für Kassetten kleiner Größe eine an einer unteren Oberfläche davon ausgebildete Klinke (58d) aufweist, die in die Stufe (40a) der Kassette (5) kleiner Größe eingreift, wodurch die Klinke (58d) beim Einführen der Kassette kleiner Größe, wenn die Kassette kleiner Größe außerhalb eines von dem Führungselement (58) für Kassetten kleiner Größe eingestellten Bereichs eingeführt wird, an der Kassette kleiner Größe in die Stufe (40a) der kleinen Kassette eingreift, so daß ein weiteres Einführen der Kassette kleiner Größe verhindert wird, und das Führungselement (58) für die kleine Größe beim Einführen der Kassette (1) großer Größe von einer auf die Kassette großer Größe ausgeübten Einführkraft verschwenkt wird, was das Zurückziehen nach oben der Klinke (58d) bewirkt, so daß die untere Oberfläche des Führungselementes für Kassetten kleiner Größe auf einer oberen Oberfläche der Kassette großer Größe gleitet und währenddessen dadurch beim Einführen der Kassette großer Größe gedrückt wird.

3. Kassettenhaltevorrichtung nach Anspruch 2, dadurch gekennzeichnet, daß an dem Führungselement (58) für Kassetten kleiner Größe in einer in der Kassetteneinführrichtung gesehen von der Klinke (58d) vorwärts gelegenen Position ein gekrümmter Vorsprung (58e) ausgebildet ist und der gekrümmte Vorsprung (58e) eine obere Oberfläche einer Kassette großer Größe während des Einführens der Kassette großer Größe gleitend berührt, so daß zwischen der Klinke (58d) und der oberen Oberfläche der Kassette großer Größe ein Zwischenraum erhalten bleibt.

4. Kassettenhaltevorrichtung nach einem der vorstehenden Ansprüche, dadurch gekennzeichnet, daß an dem oberen Abschnitt (42) des Kassettenhalteelementes (41) in einer der Vorderseite der Bandkassetteneinführöffnung näheren Position als das Führungselement (58) für Kassetten kleiner Größe ein Führungsöffner (70) schwenkbar vorgesehen ist, wobei der Öffner (70) ein gleitend in das Führungselement (58) für Kassetten kleiner Größe eingreifendes Ende (73) und ein anderes Ende (75) aufweist, welches eine Vorderoberfläche einer Kassette beim Beginn des Einführens der Kassette berührt, wodurch der Führungsöffner (70) beim Einführen einer Kassette (1) großer Größe von der Vorderoberfläche (39) der Kassette verschwenkt wird, so daß das Führungselement (58) für Kassetten kleiner Größe nach oben zurückgezogen wird.

5. Kassettenhaltevorrichtung nach einem der vorstehenden Ansprüche, dadurch gekennzeichnet, daß zumindest ein Abschnitt einer Vorderoberfläche des Führungselementes (58) für Kassetten kleiner Größe mit einer zu der Vorderoberfläche einer eingeführten Kassette im wesentlichen parallelen Oberfläche (58c) so ausgebildet ist, daß die parallele Oberfläche (58c) die flache Vorderoberfläche der Kassette überlappt, und das Führungselement (58) für Kassetten kleiner Größe in Verbindung mit dem Verschwenken des Führungsöffners (70) während des Einführens einer Kassette (1) großer Größe nach oben verschwenkt wird und dementsprechend die Verschiebung der vorderseitenparallelen Oberfläche (58c) des Führungselementes (58) für Kassetten kleiner Größe so ist, daß der Überlapp zwischen der flachen Vorderoberfläche (39) der Kassette (1) großer Größe und der Vorderoberfläche des Führungselementes (58) für Kassetten kleiner Größe Null wird.

6. Kassettenhaltevorrichtung nach Anspruch 5, dadurch gekennzeichnet, daß der flache parallele Oberflächenabschnitt (58c) des Führungselementes (58) für Kassetten kleiner Größe und eine einer Seitenoberfläche einer eingeführten Kassette kleiner Größe gegenüberliegende Oberfläche (58b) des Führungselementes für Kassetten kleiner Größe durch eine relativ zu der seitlichen Oberfläche der Kassette kleiner Größe schräge flache Oberfläche miteinander verbunden sind.

7. Kassettenhaltevorrichtung nach einem der vorstehenden Ansprüche, dadurch gekennzeichnet, daß ein Rückhalteelement (46, 47) für Kassetten großer Größe, das dazu ausgelegt ist, an eine obere Oberfläche einer Kassette (1) großer Größe bei deren Einführen zu stoßen, um die große Kassette mit einem geeigneten Druck hinunterzudrücken, und ein Rückhalteelement (61) für Kassetten kleiner Größe vorgesehen sind, das dazu ausgelegt ist, an eine obere Oberfläche einer Kassette (5) kleiner Größe bei deren Einführen zu stoßen, um die Kassette kleiner Größe nach unten zu drücken, wodurch das Führungselement (58) für Kassetten kleiner Größe beim Einführen der Kassette (1) großer Größe verschwenkt wird, so daß es sich aus dem Einführweg der großen Kassette (1) zurückzieht, und das Rückhalteelement (61) für Kassetten kleiner Größe in Verbindung mit dem Verschwenken des Führungselementes (58) für Kassetten kleiner Größe betätigt wird, so daß es sich in eine Position zurückzieht, in der es die obere Oberfläche der Kassette großer Größe nicht berührt.

8. Kassettenhaltevorrichtung nach einem der vorstehenden Ansprüche, dadurch gekennzeichnet, daß ein Verriegelungselement (68) für Kassetten kleiner Größe vorgesehen ist, das an einer einer Seitenoberfläche einer eingeführten Kassette (5) kleiner Größe gegenüberliegenden Seitenoberfläche des Führungselementes (58) für kleine Kassetten schwenkbar angebracht ist, und ein Teil (68), das dazu ausgelegt ist, in eine in der Seitenoberfläche der Kassette kleiner Größe ausgebildete Aussparung (37) einzugreifen, und ein Federelement aufweist zum Drücken des Verriegelungselementes (68) für Kassetten kleiner Größe in Richtung auf die Seitenoberfläche der Kassette kleiner Größe, wodurch das Teil (68) des Verriegelungselements (68) für Kassetten kleiner Größe bei Vollendung des Einführens der Kassette kleiner Größe in die Aussparung (37) eingreift, während das Verriegelungselement (68) für Kassetten kleiner Größe beim Einführen einer großen Kassette (1) in Verbindung mit der Betätigung des Führungselementes (58) für Kassetten kleiner Größe betätigt wird, so daß es sich aus dem Einführweg der Kassette (1) großer Größe zurückzieht.

9. Kassettenhaltevorrichtung nach einem der Ansprüche 2 bis 8, dadurch gekennzeichnet, daß zumindest ein Falscheinführverhinderungshebel (52, 53) vorgesehen ist, der an dem oberen Abschnitt (42) des Kassettenhalteelements (41) verschwenkbar angebracht ist und auf eine eingeführte Kassette zu zum Verhindern falschen Einführens der Kassette gedrückt wird, wobei dieser Falscheinführverhinderungshebel (52, 53) mit einer Klinke (52a) an einer unteren vorstehenden Oberfläche davon ausgebildet ist und dazu ausgelegt ist, in eine Position verschwenkt zu werden, in der die Klinke (52a) niedriger als eine obere Oberfläche einer eingeführten Kassette liegt, wobei die Klinke (52a) eine zu einer Vorderoberfläche der eingeführten Kassette parallele Oberfläche aufweist.

10. Kassettenhaltevorrichtung nach Anspruch 9, dadurch gekennzeichnet, daß der Falscheinführverhinderungshebel (52, 53) mit einer von einer zu der Vorderoberfläche einer eingeführten Kassette im wesentlichen parallelen Oberfläche und einer die parallele Oberfläche schneidenden Oberfläche festgelegten Stufe ausgebildet ist; wobei die Höhe der Stufe in einer Tiefenrichtung der Kassette gemessen kleiner als die Höhe einer an einem oberen Vorderabschnitt der Kassette ausgebildeten abgeschrägten Oberfläche ausgelegt ist; und die zu der Vorderoberfläche der Kassette parallele Oberfläche der Stufe dazu ausgelegt ist, der Vorderoberfläche der Kassette gegenüberliegend ausgerichtet zu sein.

11. Kassettenhaltevorrichtung nach Anspruch 10, dadurch gekennzeichnet, daß die Stufe in einer niedrigeren Position als die obere Oberfläche einer eingeführten Kassette liegt.

12. Kassettenhaltevorrichtung nach Anspruch 9, dadurch gekennzeichnet, daß der Falscheinführverhinderungshebel (52, 53) mit einem gekrümmten Vorsprung (52b) in einer in der Kassetteneinführrichtung gesehen tieferen Position als die Position der Stufe ausgebildet ist, so daß der gekrümmte Vorsprung (52b) beim Einführen einer Kassette eine obere Oberfläche einer Kassette berührt und die Endkante der Stufe in eine von der oberen Oberfläche der Kassette beabstandete Position nach oben bewegt wird.

## Revendications

1. Dispositif de support de cassette, capable de recevoir une cassette pour le chargement/déchargement de celle-ci dans/depuis le corps d'un appareil d'enregistrement sur bande, comprenant un élément porte-cassette (41) pour supporter une cassette, cet élément porte-cassette (41) comportant une ouverture d'insertion de la cassette, une partie supérieure (42) et un organe de guidage de cassette (58) monté à rotation, caractérisé en ce que ce dispositif est capable de recevoir au moins deux sortes de cassette de formats différents, et en ce que ledit organe de guidage de cassette (58) est monté à rotation sur la partie supérieure (42) de l'élément porte-cassette (41) de façon à faire saillie dans ladite ouverture d'insertion de cassette pour guider une cassette (5) de petit format dans l'élément porte-cassette (41), afin de régler une position insérée de ladite cassette (5) de sorte qu'il existe un faible intervalle entre une surface (58a) de l'organe de guidage des cassettes (58) de petit format et une surface latérale de la cassette opposée à ladite surface (58a) de l'organe de guidage, de telle manière qu'à l'insertion d'une cassette de petit format, ledit organe (58) de guidage des cassettes de petit format guide ladite cassette de petit format (5) vers sa position insérée au moyen de ladite surface (58a) de l'organe de guidage qui guide la surface latérale de la cassette, tandis qu'à l'insertion d'une cassette de grand format (1), ledit organe (58) de guidage des cassettes de petit format pivote vers le haut dans une position où il est hors du trajet d'insertion de la cassette de grand format (1), sous l'action d'une force d'insertion exercée sur la cassette de grand format.

2. Dispositif de support de cassette selon la revendication 1, caractérisé en ce qu'il est capable de recevoir une cassette de petit format (5), sur une partie supérieure (39) de la surface avant de laquelle, en considérant la direction d'insertion, il est formé un gradin (40a) par lequel la hauteur de ladite partie supérieure de la surface avant est effectivement réduite, et une cassette de grand format (1), sur la partie supérieure (31) de la surface avant de laquelle est formée une surface inclinée à la manière d'un chanfrein (31a), l'organe (58) de guidage des cassettes de petit format comportant un cliquet (58d) qui est formé sur sa surface inférieure et qui entre en prise avec le gradin (40a) de ladite cassette de petit format (5), d'où il résulte qu'a l'insertion de la cassette de petit format, si celle-ci est insérée en dehors d'une zone définie par ledit organe (58) de guidage des cassettes de petit format, le cliquet (58d) sur cet organe entre en prise avec le gradin (40a) de la cassette de petit format et empêche d'insérer davantage cette cassette, tandis qu'à l'insertion de la cassette de grand format (1), ledit organe (58) de guidage des cassettes de petit format pivote sous l'effet d'une force d'insertion exercée sur la cassette de grand format, ce qui fait que ledit cliquet (58d) est placé en retrait vers le haut et que la surface inférieure dudit organe de guidage des cassettes de petit format glisse sur la surface supérieure de la cassette de grand format, étant ainsi repoussée pendant l'insertion de la cassette de grand format.

3. Dispositif de support de cassette selon la revendication 2, caractérisé en ce qu'une saillie en arc de cercle (58e) est formée sur ledit organe (58) de guidage des cassettes de petit format en avant dudit cliquet (58d) en considérant la direction d'insertion de la cassette, cette saillie en arc de cercle (58e) entrant en contact glissant avec la surface supérieure d'une cassette de grand format pendant l'insertion de celle-ci, de façon à maintenir un intervalle entre ledit cliquet (58d) et la surface supérieure de la cassette de grand format.

4. Dispositif de support de cassette selon l'une quelconque des revendications 1 à 3, caractérisé en ce qu'il est prévu un ouvre-guide (70) monté à rotation sur la partie supérieure (42) de l'élément porte-cassette (41) en un point situé plus près du devant de l'ouverture d'insertion des cassettes que ledit organe (58) de guidage des cassettes de petit format, ledit ouvre-guide (70) présentant une extrémité (73) qui est en prise glissante avec ledit organe (58) de guidage des cassettes de petit format et une autre extrémité (75) qui entre en contact avec une surface avant d'une cassette lors de l'insertion initiale de celle-ci, d'où il résulte qu'à l'insertion d'une cassette de grand format (1), ledit ouvre-guide (70) pivote sous l'action de la surface avant (39) de la cassette et que ledit organe (58) de guidage des cassettes de petit format est placé en retrait vers le haut.

5. Dispositif de support de cassette selon l'une quelconque des revendications 1 à 4, caractérisé en ce qu'il est formé, dans une partie au moins d'une surface avant dudit organe (58) de guidage des cassettes de petit format, une surface (58c) sensiblement parallèle à la surface avant d'une cassette en cours d'insertion, de telle sorte que cette surface parallèle (58c) dépasse la surface avant plate de la cassette, et en ce que ledit organe (58) de guidage des cassettes de petit format pivote vers le haut en association avec la rotation dudit ouvre-guide (70) pendant l'insertion d'une cassette de grand format (1) et, en conséquence, le déplacement de la surface parallèle avant (58c) dudit organe (58) de guidage des cassettes de petit format est tel que le dépassement entre la surface avant plate (39) de la cassette de grand format (1) et la surface avant dudit organe (58) de guidage des cassettes de petit format devient nul.

6. Dispositif de support de cassette selon la revendication 5, caractérisé en ce que la partie (58c) de la surface parallèle plate de l'organe (58) de guidage des cassettes de petit format et une surface (58b) de cet organe opposée à une surface latérale d'une cassette de petit format en cours d'insertion sont reliées l'une à l'autre par une surface plate inclinée par rapport à ladite surface latérale de la cassette de petit format.

7. Dispositif de support de cassette selon l'une quelconque des revendications 1 à 6, caractérisé en ce qu'il est prévu un organe (46, 47) de retenue des cassettes de grand format, agencé de façon à s'appliquer contre une surface supérieure d'une cassette de grand format (1) lors de l'insertion de celle-ci, pour repousser la cassette de grand format vers le bas avec une pression appropriée, un organe (61) de retenue des cassettes de petit format, agencé de façon à s'appliquer contre une surface supérieure d'une cassette de petit format (5) lors de l'insertion de celle-ci, pour repousser ladite cassette de petit format vers le bas, d'où il résulte qu'à l'insertion de la cassette de grand format (1), l'organe (58) de guidage des cassettes de petit format pivote de façon à se placer en retrait, hors du trajet d'insertion de la cassette de grand format (1), et ledit organe (61) de retenue des cassettes de petit format est actionné en association avec la rotation dudit organe (58) de guidage des cassettes de petit format, de façon à se placer en retrait dans une position dans laquelle il n'entre pas en contact avec la surface supérieure de la cassette de grand format.

8. Dispositif de support de cassette selon l'une quelconque des revendications 1 à 7, caractérisé en ce qu'il est prévu un organe (68) de verrouillage des cassettes de petit format, monté à rotation sur une surface latérale dudit organe (58) de guidage des cassettes de petit format opposée à une surface latérale d'une cassette de petit format (5) en cours d'insertion, et comportant une partie (68) agencée de façon à s'engager dans un creux (37) formé dans la surface latérale de la cassette de petit format, un élément à ressort pour repousser ledit organe (68) de verrouillage des cassettes de petit format vers la surface latérale de la cassette de petit format, d'où il résulte qu'à l'achèvement de l'insertion de la cassette de petit format, la partie (68) dudit organe (68) de verrouillage des cassettes de petit format s'engage dans ledit creux (37), tandis que lors de l'insertion d'une cassette de grand format (1), ledit organe (68) de verrouillage des cassettes de petit format est actionné en association avec l'actionnement dudit organe (58) de guidage des cassettes de petit format, de façon à se placer en retrait hors du trajet d'insertion de la cassette de grand format (1).

9. Dispositif de support de cassette selon l'une quelconque des revendications 2 à 8, caractérisé en ce qu'il est prévu au moins un levier (52, 53) de prévention d'une insertion erronée, monté à rotation sur la partie supérieure (42) de l'élément porte-cassette (41) et sollicité vers une cassette en cours d'insertion pour empêcher l'insertion erronée d'une cassette, ce levier (52, 53) de prévention d'une insertion erronée comportant un cliquet (52a) sur une surface saillante inférieure de celui-ci et étant agencé de façon à pivoter dans une position dans laquelle ledit cliquet (52a) est situé plus bas qu'une surface supérieure d'une cassette en cours d'insertion, ledit cliquet (52a) présentant une surface parallèle à une surface avant de la cassette en cours d'insertion.

10. Dispositif de support de cassette selon la revendication 9, caractérisé en ce qu'il est formé, dans ledit levier (52, 53) de prévention d'une insertion erronée, un gradin défini par une surface pratiquement parallèle à la surface avant d'une cassette en cours d'insertion et par une surface coupant cette surface parallèle, la hauteur dudit gradin étant plus petite que la hauteur d'une surface inclinée formée sur une partie supérieure avant de la cassette, mesurée dans la direction de l'épaisseur de la cassette, et la surface du gradin parallèle à la surface avant de la cassette étant agencée de façon à être dirigée à l'opposé de la surface avant de la cassette.

11. Dispositif de support de cassette selon la revendication 10, caractérisé en ce que ledit gradin se place dans une position inférieure à la surface supérieure d'une cassette insérée.

12. Dispositif de support de cassette selon la revendication 9, caractérisé en ce qu'il est formé, dans ledit levier (52, 53) de prévention d'une insertion erronée, une saillie en arc de cercle (52b) dans une position située plus profondément que ledit gradin en considérant la direction d'insertion de la cassette, de telle sorte qu'à l'insertion d'une cassette, ladite saillie en arc de cercle (52b) entre en contact avec une surface supérieure de la cassette et que le bord d'extrémité dudit gradin soit déplacé vers le haut, dans une position où il est à distance de la surface supérieure de la cassette.
